# EUROPÄISCHE PATENTSCHRIFT

(11) **EP 0 743 292 B1**
(45) Veröffentlichungstag und Bekanntmachung des Hinweises auf die Patenterteilung: **12.08.1998**
(21) Anmeldenummer: 96107038.0
(22) Anmeldetag: 04.05.1996
(51) Int. Cl.: C04B 41/48, C04B 28/26

(54) **Flächiges Brandschutzmaterial**
Planar fire-proof material
Matériau ignifuge plan

(30) Priorität: 13.05.1995 DE 19517717
(43) Veröffentlichungstag der Anmeldung: 20.11.1996
(73) Patentinhaber: BASF AKTIENGESELLSCHAFT, 67056 Ludwigshafen (DE)
(72) Erfinder: Walter, Wolfgang, 67240 Bobenheim-Roxheim (DE); Maier, Harry, 67354 Römerberg (DE)

(56) Entgegenhaltungen:
- CH-A- 590 798
- DE-A- 1 621 799
- DE-A- 4 120 759
- DE-B- 1 169 832
- US-A- 3 594 460
- CHEMICAL ABSTRACTS, vol. 105, no. 26, 29.Dezember 1986 Columbus, Ohio, US; abstract no. 231545j, I. SCHMIDT ET AL.: "fire-protective foam silicate layer with a smooth surface and a continuous preparation method" XP000064574 & CS-A-231 948
- DATABASE WPI Week 8745 Derwent Publications Ltd., London, GB; AN 87-318657 XP002011039 & JP-A-62 227 921 (TOSHIBA)

## Beschreibung

Die Erfindung betrifft ein flächiges Brandschutzmaterial auf Basis von wasserhaltigem, faserverstärktem Natriumsilikat, welches mit einer Schutzschicht versehen ist.

Brandschutzmaterialien aus wasserhaltigen Alkalimetallsilikaten sind seit langem bekannt und werden bereits vielfältig für den vorbeugenden Brandschutz eingesetzt. Sie bewirken bei hohen Temperaturen, wie sie z.B. im Brandfall auftreten, durch Schaumbildung, Volumenvergrößerung und Ausbildung eines Blähdrucks eine hervorragende Isolierung gegen Feuer und Rauch, und führen so eine Abdichtung von Öffnungen und Durchgängen in Baukörpern herbei. Derartige Materialien sowie Verfahren zu ihrer Herstellung sind z.B. in der DE-B 11 69 832 beschrieben. In der genannten Druckschrift wird empfohlen, die Brandschutzplatten gegen das Verdunsten des Wassers durch Kunststoffschichten, z.B. Polyethylenüberzüge zu schützen. Diese sind jedoch für Kohlendioxid durchlässig, welches durch chemische Reaktion die Wirksamkeit des wasserhaltigen Natriumsilikats mindert. Nach DE-A 16 21 799 sollen deshalb festhaftende Überzüge aus Epoxidharz/Härter-Gemischen auf die Brandschutzplatten aufgebracht werden.

Ein Hauptanwendungsgebiet der Brandschutzmaterialien sind Feuerschutztüren aus Holz, bei denen an den Stirnflächen des Türblatts Brandschutzstreifen aufgebracht sind. Hierbei treten in vielen Fällen Probleme dadurch auf, daß beim Verkleben mit üblichen Schmelzklebern wegen der glatten Oberfläche der Epoxidharzschicht die Haftung nicht ausreichend ist. Der Erfindung lag also die Aufgabe zugrunde, diese Haftung zu verbessern.

Es wurde gefunden, daß diese Aufgabe gelöst wird, wenn die Epoxidharz-Schutzschicht 5 bis 75 Gew.-% eines körnigen Füllstoffs an ihrer Oberfläche eingelagert enthält.

Das Brandschutzmaterial besteht aus wasserhaltigem Natriumsilikat mit einem Wassergehalt von 20 bis 50, vorzugsweise von 25 bis 40 Gew.-%, dem zur Verstärkung Glasfasern in Mengen von 2 bis 20 Gew.-% zugefügt sind. Weitere Einzelheiten über Aufbau und Herstellung des Brandschutzmaterials sind in den genannten Druckschriften beschrieben.

Die Brandschutzplatten werden unmittelbar nach ihrer Herstellung mit einem Epoxidharz/Härter-Gemisch beschichtet, wobei Schichtdicken zwischen 20 und 100 µm üblich sind. Das Harz kann übliche Zusatzstoffe, wie z. B. Füllstoffe zugemischt enthalten. Da erfindungsgemäß eine verhältnismäßig große Menge Füllstoff auf die Oberfläche aufgebracht wird, kann der sonst übliche hohe Füllstoffgehalt stark reduziert, sogar bis auf Null reduziert werden.

Erfindungsgemäß wird nun vor dem Aushärten des Epoxidharzes auf dessen Oberfläche 5 bis 75, vorzugsweise 20 bis 50 Gew.-% eines körnigen Füllstoffs aufgestreut. Dies kann z. B. durch eine Rüttelrinne geschehen. Beim Aushärten des Epoxidharzes wird der Füllstoff fest an der Oberfläche verankert und verleiht dieser eine rauhe, schmirgelpapierartige Konsistenz.

Bevorzugte Füllstoffe sind Quarzsand und Kreide, geeignet sind aber beispielsweise auch Gips und Feldspat. Die Teilchengröße der Füllstoffe kann sich in weiten Grenzen zwischen 5 und 100 µm bewegen, bevorzugt sind 20 bis 50 µm.

Vor der Applikation werden die Brandschutzplatten zu 2 bis 10 cm breiten Streifen geschnitten. Ihre Dicke beträgt 1 bis 5 mm. Sie können mit üblichen Schmelzklebern, z. B. auf Basis von Ethylen/Vinylacetat-Copolymer auf die Stirnseiten von Türblättern geklebt werden, wobei eine ausgezeichnete Haftung erhalten wird.

## Patentansprüche

1. Flächiges Brandschutzmaterial auf Basis von wasserhaltigem, faserverstärktem Natriumsilikat, welches mit einer Schutzschicht auf Basis eines gehärteten Epoxidharzes beschichtet ist, dadurch gekennzeichnet, daß die Schutzschicht 5 bis 75 Gew.-% eines körnigen Füllstoffs an ihrer Oberfläche eingelagert enthält.

2. Brandschutzmaterial nach Anspruch 1, dadurch gekennzeichnet, daß die Teilchengröße des Füllstoffs zwischen 5 und 100 µm liegt.

3. Brandschutzmaterial nach Anspruch 1, dadurch gekennzeichnet, daß der Füllstoff aus Quarzsand oder Kreide besteht.

## Claims

1. A sheetlike fire protection material comprising water-containing, fiber-reinforced sodium silicate coated with a protective layer based on a cured epoxy resin, wherein the protective layer includes from 5 to 75 % by weight of a granular filler embedded in its surface.

2. A fire protection material as claimed in claim 1, wherein the particle size of the filler is within the range from 5 to 100 µm.

3. A fire protection material as claimed in claim 1, wherein the filler comprises quartz sand or chalk.

## Revendications

1. Matériau ignifuge plan à base de silicate de sodium hydraté, renforcé par fibre, plastifié avec une couche de protection à base d'une résine époxy durcie, caractérisé en ce que la couche de protection contient 5 à 75 % en poids d'une matière de charge granulée intercalée dans sa surface.

2. Matériau ignifuge selon la revendication 1, caractérisé en ce que la dimension des particules de matière de charge varie entre 5 et 100 µm.

3. Matériau ignifuge selon la revendication 1, caractérisé en ce que la matière de charge se compose de sable siliceux ou de craie.
